# EUROPEAN PATENT SPECIFICATION

(11) **EP 0 421 535 B1**
(45) Date of publication and mention of the grant of the patent: **14.12.1994**
(21) Application number: 90202591.5
(22) Date of filing: 01.10.1990
(51) Int. Cl.: H04Q 7/04

(54) **Method for transferring, between two switching exchanges for mobile services, the handling of an active connection with a mobile terminal**
Umschaltungsverfahren zwischen zwei Vermittlungsanlagen für mobile Dienste von einer aktiven Verbindung zu einem mobilen Endgerät
Méthode de transfert, entre deux autocommutateurs pour services mobiles, d'une connexion active avec un terminal mobile

(30) Priority: 03.10.1989 NL 8902453
(43) Date of publication of application: 10.04.1991
(73) Proprietor: Koninklijke PTT Nederland N.V., 2509 CH Den Haag (NL)
(72) Inventor: Hecker, Hubertus Pierre Johannes, NL-2271 AK Voorburg (NL)

(56) References cited:
- EP-A- 0 281 111
- GLOBAL TELECOMMUNICATIONS CONFERENCE ,NOV.15-18, 1987. vol. 3, TOKYO (JP) pages1583 - 1588; A.NAKAJIMA et al: "Enlarging Technologies Based On No.7 SignallingSystem For Mobile Communication Network"
- Commutation & Transmission no. 4, 1988,PARIS (FR) pages 17 - 30; M.BALLARD et al: "ECR 900 La RadiotéléphonieNumérique Européenne d'ALCATEL."
- 36th IEEE Vehicular Technology Conference,20-22 May,1986 DALLAS (US) pages 304- 310; G.D. CULP: "Cellular Intersystem Handoff: Creating TransparentBoundaries."
- Proceedings of the International Switching Symposium ,May 7-11, 1984 ,Session32B,Paper 4, AMSTERDAM (NL) T. GOTO et al: "Nation-Wide Automobile TelephoneService Using Tracking Exchange Technology "

## Description

### BACKGROUND OF THE INVENTION

The invention relates to a method for transferring the handling of an active connection made to a mobile terminal between two switching exchanges equipped for mobile services in a telecommunication system equipped for mobile communication, comprising at least one mobile terminal, a plurality of base stations equipped for communication via a radio path with the mobile terminal and each having a working area with a limited range, at least two switching exchanges equipped for mobile services and each being able to interact with a specific group of the plurality of base stations, and a exchange equipped for fixed telecommunication which is able to interact with the switching exchanges in which method, to transfer the handling of an active connection made to the mobile terminal which is being handled by a first switching exchange which is connected to the exchange equipped for fixed telecommunication to a base station associated with the other switching exchange, a connection is made between the first switching exchange and the other switching exchange and a connection is made between said other switching exchange and the base station associated therewith, which base station reserves a radio channel for the mobile terminal, after which the communication with the mobile terminal is taken over by said base station.

Such a method is better known under the name "handover procedure", which name will therefore be used hereinafter. A handover procedure serves to transfer the handling of an active connection made to a mobile terminal, for example a car telephone, from one switching exchange to an adjacent switching exchange, this being necessary because each of the base stations associated with every switching exchange, and consequently every switching exchange as well, only has a working area with a limited range. Hereinafter the term "active connection" is understood to mean the term "call" which is more usual in specialist circles, a "call" comprising the ringing, the transaction and the termination thereof, and a transaction relating either to data or to speech.

For the future pan-European digital mobile telecommunication system, the so-called GSM (Group Special Mobile), a handover procedure has already been defined. The progress of said handover procedure is described in general in "Network Aspects of the RACE Mobile Telecommunications System" by M. Meijer, presented at the "Annual Conference of RACE project 1043, Cambridge, 23-25 January 1989. Said handover procedure is described in a very detailed fashion in GSM report GSM 03.09, version 3.0.0, dated 15th February 1988.

As will appear from what follows, in addition to a number of attractive aspects, the handover procedure proposed for GSM has the great drawback that the switching exchange via which an active connection is initiated remains included in the communication path to the mobile terminal throughout the duration of the connection, even if the mobile terminal moves to the working area of a base station associated with another switching exchange. The switching exchange via which the connection is initiated is understood to mean the exchange which contains the so-called call control. Said call control relates not only to the setting-up, maintenance and disconnection of a connection, but may also comprise additional services such as a waiting state for calls if the terminal rung is busy or even a ring-back service. In the handover procedure according to GSM, there is therefore the possibility that during a large part of the duration of a connection, two switching exchanges are involved in the maintenance thereof. This has the drawback that as efficient use as possible is not made of the units available in the mobile telecommunication system. This carries even more weight if account is taken of the fact that the time duration of active connections is only expected to increase in the future and consequently, so also will the duration of the simultaneous involvement of two switching exchanges in an active connection. Another drawback is that the first switching exchange involved in an active connection provides the billing during the whole time that the connection is active. As a result, it is not possible to adjust the billing if the mobile terminal moves in the meantime over a large distance to a region having a different billing rate.

### SUMMARY OF THE INVENTION

The object of the invention is to provide a handover procedure which has the most important advantages of the handover procedure defined for GSM but does not have the drawback described above and in which, after the handover procedure has been completed, only a single switching exchange is therefore included in all cases in the communication path to the mobile terminal. For the sake of completeness, it is further pointed out in this connection that, although the object of the invention is to provide a method which can be advantageously used in GSM, the use does not have to be limited to GSM but is also possible in other mobile telecommunication systems.

For this purpose, the invention provides a method of the abovementioned type in which a connection is also made between the exchange equipped for fixed telecommunication and the other switching exchange, and in which, after the connection to the mobile terminal has been taken over by the base station associated with the other switching exchange, the entire handling of the connection is taken over by said other switching exchange and the connection between the two switching exchanges and between the first switching exchange and the exchange equipped for fixed telecommunication, is disconnected.

### REFERENCES

■ M. Meijer, Network Aspects of the RACE Mobile Telecommunications System
   Annual Conference RACE 1043, Cambridge, 23-25 January 1989;
■ GSM Rep 03.09, version 3.0.0, 15 February 1988

### EXEMPLARY EMDODIMENTS

The invention will be illustrated in more detail by reference to the drawing in which:
Figure 1 shows a diagrammatic representation of the structure of a GSM network;
Figure 2a-b shows a diagrammatic representation of a known handover procedure in a GSM network;
Figure 3a-d shows a diagrammatic representation of the handover procedure according to the invention;
Figure 4 shows a very general diagrammatic representation of a mobile telecommunication system, and
Figure 5 shows a flow diagram of the method according to the invention.

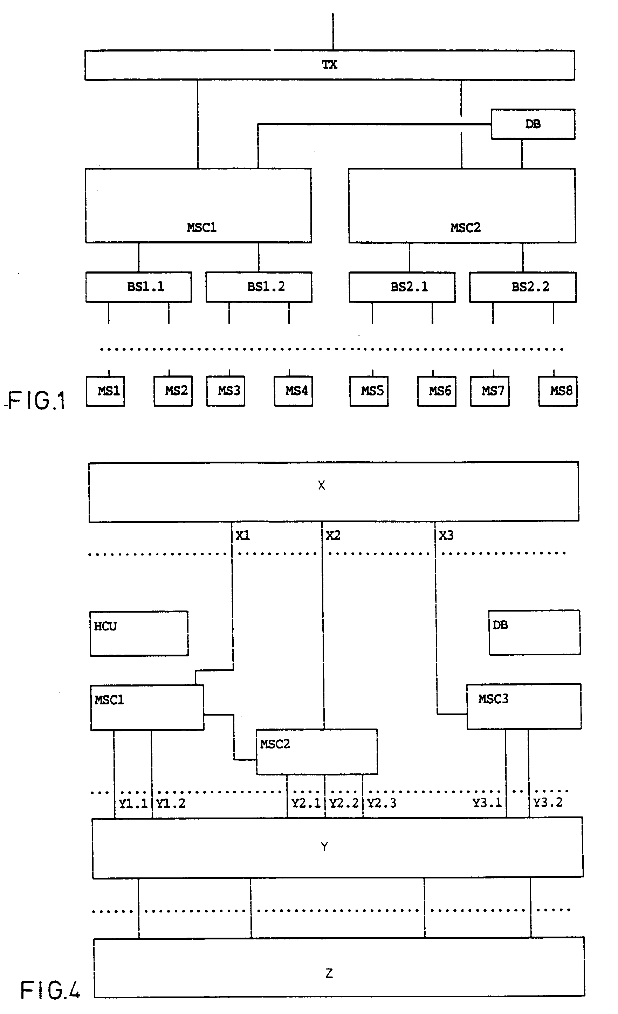

Figure 1 shows diagrammatically the structure of a GSM network. Such a network is composed of a plurality of mobile stations (MS) which represent the terminals, for example the telephone sets, of the mobile subscribers. Each mobile station can be connected via a radio path to a base station (BS) which is a transceiver unit having a working area with a limited range, a so-called cell. Every mobile station which is located inside the cell of a particular base station and has an active connection is in contact with said base station via a radio connection. One cell may contain a plurality of mobile stations having an active connection, all the said mobile stations therefore being connected to the same base station. A plurality of base stations is associated with a mobile switching exchange (MSC) which is a local exchange such as those also encountered in fixed telecommunication networks and which contains, inter alia, the switching functions supplemented by the specific functions which are necessary in order to be able to operate mobile telecommunication. One MSC therefore has a working area which comprises all the cells of the associated base stations.

A data base (DB) is connected to the mobile switching exchanges and contains the data which relate to the mobile aspects of the GSM system. Finally, a transit exchange (TX), which is a exchange such as is also used in fixed telecommunication systems such as ISDN, is provided. Said exchange contains switching functions and the like. A plurality of MSCs is connected to one TX. The TX is connected in turn to a conventional fixed telecommunication network which is not shown.

If an MS moves from one cell, for example the working area of BS 1.2, to another cell, for example the working area of BS 2.1, said MS will have to be connected to the base station that is associated with said new cell. An existing active connection will therefore have to be rerouted to the new base station while the connection is active so that no interruption occurs. This rerouting is termed "handover". During handover, the situation may occur that a mobile station moves from the working area of one base station to another base station, for example from base station 1.1 to base station 1.2, which are both associated with the same mobile switching exchange in this case MSC1. This situation will not be discussed in the present case in view of the fact that the GSM proposal for this type of handover already offers a satisfactory solution. The present application relates exclusively to the case where a mobile station moves from the cell of a base station associated with the first mobile switching exchange to the cell of a base station associated with a second mobile switching exchange, that is to say, for example, from BS 1.2 to BS 2.1 in Figure 1.

The controlling functions which are important for a handover procedure are, in particular, "call control" and "handover control". In the GSM system said functions are assigned to the mobile switching exchange which initially handles the active connection from TX to MS.

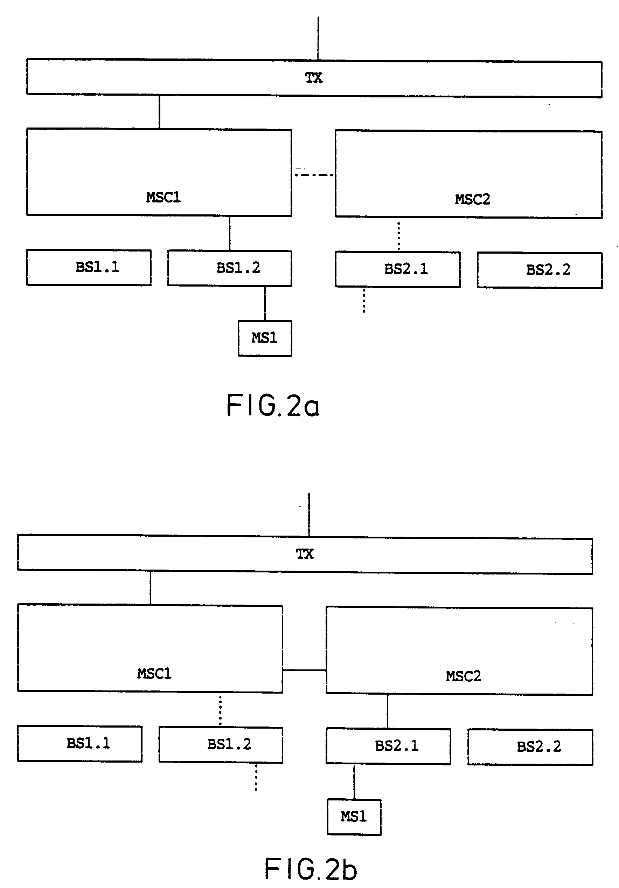

Figure 2 shows diagrammatically the progress of the handover procedure according to the existing GSM proposal. Figure 2a shows the initial situation in which MSC1 is the mobile switching exchange which is originally included in the connection between TX and MS1 and therefore contains the functions "call control" and "handover control". In Figure 2a, continuous lines indicate the functional connections between the diverse units of the GSM network in an initial situation in which MS1 is connected to TX via BS 1.2 and MSC1.

If MS1 moves from the cell of BS 1.2 to the cell of BS 2.1, a handover procedure from BS 1.2 to BS 2.1 is started. The handover procedure according to GSM proceeds in four steps.

Step 1: a request is made from MSC 1, which contains the "handover control", to MSC2 for a connection to be set up from MSC2 to MS1. For this purpose a connection from MSC2 to BS 2.1 and also a radio channel in BS 2.1 are reserved. MSC2 informs MSC1, inter alia, which radio channel has been reserved. The connections formed during step 1 are indicated by dotted lines in Figure 2a.

Step 2: MSC1 forms a connection between MSC1 and MSC2. MSC2 couples said connection through to the connection between MSC2 and BS 2.1. Finally, MSC1 couples the connection MSCI-MSC2 to the connections TX-MSC1 and MSC1-BS 1.2 by means of a so-called bridge. The setting-up and functioning of such a bridge is known, inter alia, from the abovementioned GSM report. The functional connection formed during the second step is indicated in Figure 2a by a chain dotted line. The diverse internal connections inside the MSCs and the base stations are not indicated for the sake of clarity.

Step 3: MS1 can now switch over from the one "old" radio channel to the other "new" radio channel and therefore switches over from BS 1.2 to BS 2.1. Said switching-over is confirmed by the "handover control" of MSC1. Figure 2b shows the situation which is obtained after the expiry of the third step.

Step 4: MSC1 clears the connection MSC1-BS 1.2 and also the radio channel of BS 1.2 and connects the connection TX-MSC1 through to the connection MSC1-MSC2. As a result, the bridge is removed from the connection of TX to MS1. During the fourth step, the communication paths shown by the dotted line in Figure 2b is removed. From this figure it is evident that efficient use is not made of the available connections in the handover procedure according to the GSM proposal. The most expedient would be the connection along the route MS1-BS 2.1 - MSC2 - TX, which is the shortest route from TX to MS1. In the GSM proposal, the connection between MSC1 and MSC2 is necessary because MSC1 has of necessity to be included continuously in the connection because the "call control" function and functions related thereto are included in MSC1.

If MS1 moves again, this may be to a base station associated with the same mobile switching exchange with which the base station to which MS1 is currently connected is associated or to a base station that is again associated with MSC1 or even to a base station which is associated with a third mobile switching exchange MSC3. In the case where MS1 moves to a base station associated with MSC1, a handover procedure is again gone through which is in fact the inverse of the procedure described above and in which, if MS1 moves to the cell of BS 1.2, the connection ultimately extends via the route MS1-BS 1.2-MSC1-TX. After said handover procedure, MS1 is therefore again connected to TX via the shortest route. If MS1 moves to a base station BS 3.1 associated with MSC3, this is communicated to MSC1 which contains all the control related to the connection and MSC1 will request MSC3 to set up a connection to BS 3.1 and BS 3.1 will reserve a radio channel, this therefore being identical to the step 1 described above.

MSC1 then sets up a connection to MSC3, whereupon MSC3 connects said connection through to the connection MSC3-BS 3.1. MSC1 installs a bridge with which the connections TX-MSC1 and MSC1-MSC2, and also MSC1-MSC3, are coupled to one another. MS1 then switches over radio channel and is consequently connected to BS 3.1. Finally, MSC1 clears the connection MSC1-MSC2 and couples the connections TX-MSC1 and MSC1-MSC3 through, as a result of which the bridge is removed. The connection MSC2-BS 2.1 and the radio channel of BS 2.1 are also cleared. MSC1 is now included again in the route from TX to MS1, so that the shortest route from TX to MS1 is again not achieved in this case either.

The handover procedure according to GSM has the advantage that the fixed section of the telecommunication system, that is to say the section "above" the MSCs from the transit exchange and further into the network does not in any way notice that mobile telecommunication is involved in the lowermost section of the network, between the mobile stations, the base stations and the mobile switching exchanges. The disadvantage of the procedure is, however, that the mobile switching exchange, via which the connection was initially set up is active throughout the duration of the connection, so that the handover to an adjacent MSC results in an additional connection.

The invention provides a new handover procedure in which, after the expiry of the handover, the shortest route is maintained from the TX to the mobile station, so that the diverse components associated with the network, in particular the MSCs, are used more efficiently. The handover procedure according to the invention is composed of two phases, the first phase corresponding virtually completely to the handover procedure according to GSM described above and the second phase resulting in the restoration of the shortest route between TX and MS1.

As will emerge below, in the handover procedure according to the invention, the transfer of the "call control" function from one MSC to the other is also necessary. For this purpose, a new handover control unit (HCU) which deals with the totality of control related to the handover and the signalling associated therewith is introduced into the GSM network. Said HCU is not a physical unit but a functional unit which may be present, for example, in every MSC.

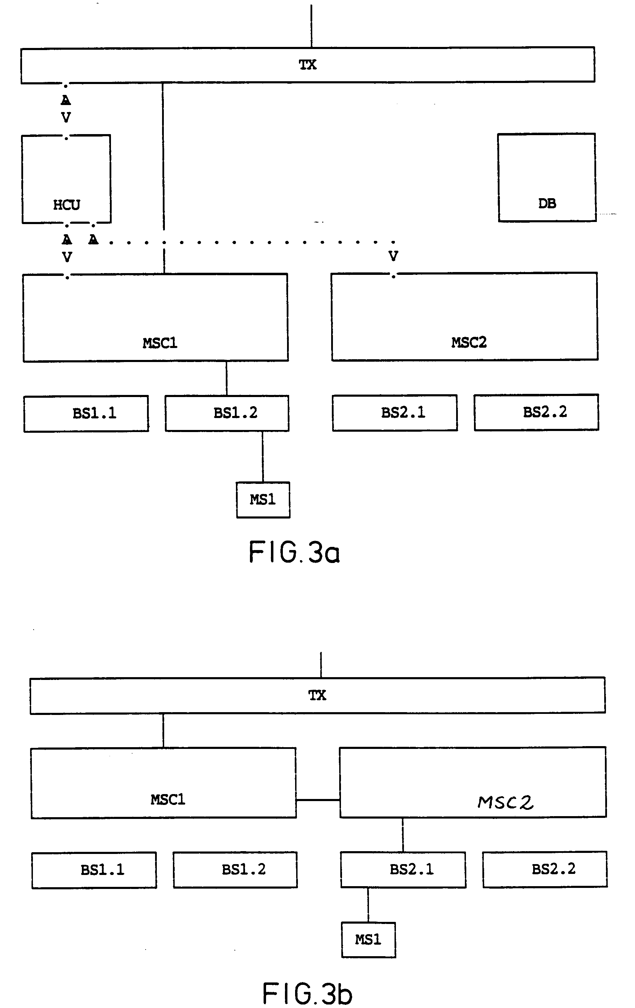

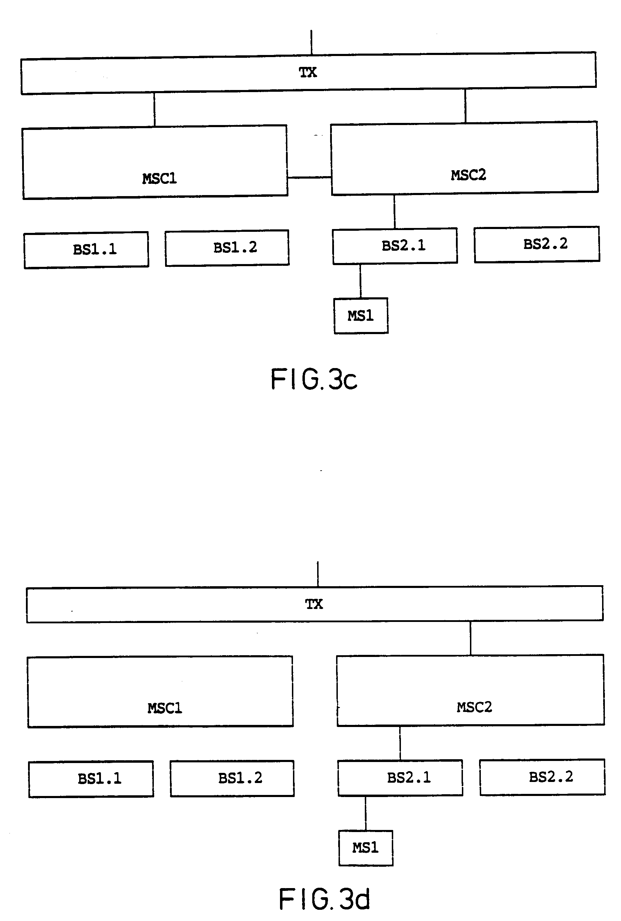

Figure 3a shows diagrammatically the GSM network at the beginning of a handover procedure according to the invention. The handover control unit HCU has a signalling connection to the TX and to the mobile switching exchanges MSC1 and MSC2. For the sake of simplicity, the database DB which is in fact necessary is not shown in Figure 3, while the HCU is not shown either in Figure 3b-d. If MS1 moves from the cell associated with BS 1.2 to the cell of BS 2.1, the handover procedure initially proceeds in a manner comparable with the steps 1 to 4 inclusive which have been illustrated above with reference to Figure 2a, b. After the expiry of step 4, the diverse connections shown in Figure 3b are achieved. Up to and including said 4th step it does not matter whether the handover control unit HCU is imagined to form part of MSC1 or is seen as a separate unit. The only difference from the handover procedure described above is that a call control function is reserved in MSC2 during the second step. Said function is synchronised with the call control function of MSC1. From the instant that this synchronisation has been achieved, both call control functions continue to be active, the call control in MSC1 having a "master" function and therefore actually taking the decisions, while the call control in MSC2 has a "slave" function and therefore has no authority to take decisions. After the situation shown in Figure 3b has been reached, the handover procedure according to the invention proceeds as follows:

Step 5: the HCU signals that a connection has to be set up between MSC2 and TX, for which purpose a bridge which couples the connections TX-MSC2 and MSC2-MSC1 and also MSC2-BS 2.1 to one another is installed in MSC2. The connection between TX and MSC2 is related by the TX to the active connection which already exists. The situation now obtained is shown in Figure 3c.

Step 6: the TX can now switch over from the connection TX-MSC1 to TX-MSC2.

Step 7: HCU signals that the call control in MSC2 has to take over the actual call control of the call control in MSC1 and from now on, the connection is therefore controlled by the MSC2 call control, to which the MSC1 call control is no longer relevant.

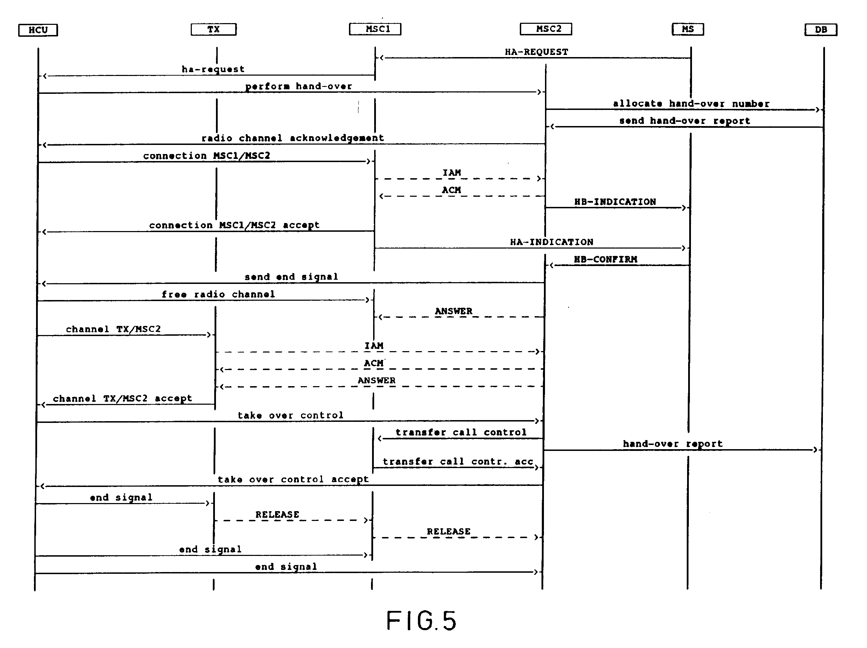

Step 8: finally, the call control function in MSC1 and also the connections TX-MSC1 and MSC1-MSC2 will be cleared. The bridge which was present until then in MSC2 is removed and the connections TX-MSC2 and MSC2-BS 2.1 will be connected through. The situation then obtained is shown in Figure 3d. It is evident from this figure that, owing to the handover procedure according to the invention, the shortest route is again achieved between TX and MS1 after the expiry of said procedure. Figure 4 shows a very diagrammatic representation of a mobile telecommunication system in which the block X represents a primary fixed telecommunication system, for example an ISDN network, having connections X1 to X3 inclusive. The fixed telecommunication system is connected via said connections to mobile switching exchanges MSC1 to MS3 inclusive, each having a plurality of outputs Y. An HCU and a DB which have the same function as described above are furthermore provided. The MSCs are connected via the Y connections to the transceiver system Y which is connected via a radio route to the terminal system Z. Referring to Figure 4, the handover procedure according to the invention can be described functionally as follows, it being assumed that, for an existing active connection, the configuration of the connections extends from Xi via Yi.k ultimately to a mobile station in the system Z.

If it is further assumed that the handover takes place from connection Yi.k to Yj.l, where i ∩ j, the handover procedure results in
Step 1: setting up of the connection MSCi/MSCJ.
Step 2: setting up of the connection Yj.l to, ultimately, MS.
Step 3: setting up of the connection Xj between the primary telecommunication system and MSCj.
Step 4: switching over of connection Yi.k to Yj.l by, ultimately, the MS.
Step 5: switching over of the primary telecommunication system from connection Xi to Xj.
Step 6: installation of a "bridge" between the connections Xi, Yi.k and MSCi/MSCj in MSCi.
Step 7: connecting through of the connections Xi and MSCi/MSCj in MSCi, the "bridge" thereby being removed.
Step 8: installation of a "bridge" between the connections Xj, Yj.l and MSCi/MSCj in MSCj.
Step 9: connecting through of the connections Xj and Yj.l in MSCj, the "bridge" thereby being removed.
Step 10: reserving of slave "call control" in MSCj in parallel with the master "call control" in MSCi.
Step 11: synchronising of slave "call control" in MSCj with master MSCi "call control".
Step 12: clearing of connection Xi.
Step 13: clearing of connection MSCi/MSCj.
Step 14: connecting through of the connections MSCi/MSCj and Yj.l in MSCj.
Step 15: transferring of call control from MSCi to MSCj.
Step 16: clearing of call control in MSCi.

These steps can be gone through in an arbitrary sequence provided the following rules are fulfilled:
- Step 1 is carried out before step 6;
- Step 1 is carried out before step 8;
- Step 2 is carried out before step 8;
- Step 3 is carried out before step 8;
- Step 1 is carried out before step 14;
- Step 2 is carried out before step 14;
- Step 6 is carried out before step 4;
- Step 8 is carried out before step 5;
- Step 4 is carried out before step 7;
- Step 5 is carried out before step 9;
- Step 5 is carried out before step 12;
- Step 5 is carried out before step 13;
- Step 10 is carried out before step 11;
- Step 11 is carried out before step 15;
- Step 15 is carried out before step 16;
- End of handover takes place after all the steps have been carried out.

It is pointed out that if step 8 takes place earlier than step 4, step 14 does not need to be carried out.

Figure 5 shows a possible flow diagram of the handover procedure according to the invention. In this it is assumed that the signalling system no. 7 (SS no. 7) is used for signalling between the exchanges. This is an internationally standardised signalling system which has been optimised for use in digital telecommunication systems together with exchanges which are controlled by processors, which also fulfils the present and future requirements for the exchange of information for transactions between exchanges in telecommunication networks such as call control, management and maintenance and which, finally, caters for a reliable transfer, in the correct sequence, of the information to be exchanged without loss or duplication of the information occurring. As a service for lower levels (the so-called Lower Level Service) use is also made inside SS no. 7 of the so-called "transaction capabilities application part" (TCAP) which has the object of enabling the exchange of information between network nodes and which offers services for particular applications without being dependent thereon. In an SS no. 7 network, TCAP is used mutually between network nodes, for example exchanges between exchanges and, for example, databases and specific units and between network service exchanges.

In Figure 5, signals from and to a so-called interworking entity are indicated by an (X) and reports which are associated with the peer-to-peer protocol between the various entities are written in lower case letters. Handover takes place when the identity of the BS to which routing has to take place has been determined.

After the HCU has received the "ha-request" message, it sends a "perform handover" message to MSC2. This message contains all the parameters which MSC2 needs in order to cause a radio channel to be allocated by the BS to which routing has to take place, and also the identity of the BS.

MSC2 calls up a so-called handover number from the database by means of exchanging the messages "allocate handover number" and "send handover report". Said number is used for routing the call from MSC1 to MSC2.

If a radio channel is available in MSC2, a "radio channel acknowledgement" message is sent from MSC2 to HCU which contains the identity of the new radio channel and the handover number.

If no radio channel is available in MSC2, this is reported to the HCU which will then terminate the handover procedure. The existing connection to the MS is not cleared.

When the "radio channel acknowledgement" message is received, the HCU sends a "connection MSC1/MSC2" message to MSC1, which message contains the identity of the radio channel and the handover number. Making use of the handover number for routing, the MSC1 then sets up a connection from MSC1 to MSC2, which is represented by the exchange of the "IAM" and "ACM" messages of the signalling system SS no. 7. MSC2 initiates the handover procedure on the radio path when the "ACM" has been sent, this being represented by "HB-INDICATION". After receiving "ACM", MSC1 informs the HCU that the connection to MSC2 has been set up, which is represented by the "connection MSC1/MSC2 accept" message.

MSC1 then "couples" the connections between the TX and MSC1, the MSC1 and MSC2, and MSC1 and the associated BS to one another by means of a so-called "bridge". MSC1 then initiates the handover procedure on the MSC1 side, this being represented by the "HA-INDICATION" message. After the MS has been successfully switched over from the "old" BS to the "new" BS, MSC2 sends an indication of this to HCU by means of the "send end signal" message. The HCU then sends a "free radio channel" message to the MSC1.

MSC1 then connects the connections between the TX and MSC1 and between the MSC1 and MSC2, the "bridge" therefore being removed, and clears the old radio channel.

A confirmation of the through connection and the clearing is sent to the HCU by MSC1 by means of the "free radio channel accept" message.

In order not to arrive at a conflict situation with the protocol of the SS no. 7 used, MSC2 has to generate an answer signal, the "ANSWER" message, when the "HB-CONFIRM" message has been received.

If the connection between MSC1 and MSC2 cannot be set up, which will be indicated in a message other than the "ACM" message, this is transmitted to the HCU which then terminates the handover procedure.

The HCU sends a "channel TX/MSC2" message to the TX. The TX then prepares to set up a connection from the TX to MSC2, which is illustrated by the "IAM" message.

After MSC2 has received said "IAM" message, it sends an "ACM" back and "couples" the connection set up with the TX to the connections between MSC1 and MSC2 and the connection between the MSC2 and the "new" BS. This is done by means of a "bridge". An "ANSWER" message is then sent to the TX. After the "ANSWER" message has been received, the TX switches from the connection which runs from the TX to the MSC1 to the connection which runs from the TX to MSC2. After this switch-over, an indication thereof is sent to the HCU, which is illustrated by the "channel TX/MSC2 accept" message.

In order to stop the procedures related to handover, the HCU sends "end signal" reports both to the TX, MSC1 and MSC2. The TX then clears the connection between the TX and MSC1 by despatching a "RELEASE" message. MSC1 will then clear the connection between MSC1 and MSC2, whereupon MSC2 removes the "bridge" and will connect through the connection between TX and MSC2 and the connection between MSC2 and the BS.

As shown in the flow diagram of Figure 5, the handover procedure also contains the transfer of call control from MSC1 to MSC2. In the handover flow diagram the following is therefore assumed:
- if MSC1 sets up a connection between MSC1 and MSC2 by transmitting the "IAM" message, the present state which the call control function is in is sent concomitantly. MSC2 will then reserve a call control function and synchronise. From this instant onwards there are therefore two call control functions, one in MSC1 and one in MSC2, which are in parallel. However, the call control function of MSC1 retains the actual control and can be seen as the "master", while the call control function of MSC2 is the "slave";
- all the messages which are related to call control and are received by MSC1 from the TX before the latter has switched over from the connection between the TX and MSC1 to the connection between the TX and MSC2 and from the "old" BS, as well as all the actions which are possibly undertaken by the call control function are transmitted to MSC2, so that the "slave" control function is able to remain synchronous;
- all the messages which are related to call control and are received by MSC1 from the TX after the latter has switched over from the connection between the TX and MSC1 to the connection between the TX and MSC2 and from the "new" BX are transmitted to MSC1 which consequently continues to receive all the call control messages and is able to remain the "master".

In this state, it holds true that the call control function contained in MSC1 is totally dependent on the transmission of the call control messages by MSC2.

HCU will ultimately initiate the actual transfer of call control by despatching the "take over control" message to MSC2. MSC2 will then take over the call control. MSC2 will no longer transmit any call control messages to MSC1 but, on the contrary, will transmit a "transfer call control" message to MSC1. MSC1 then clears its call control function and sends a confirmation of this to MSC2 by means of the "transfer call control accept" message.

After the actual takeover of call control, MSC2 sends a "handover report" message to the database DB in order to update the present location of the MS if appropriate. MSC2 finally reports the call control takeover to the HCU by means of the "take over control accept" message.

## Claims

1. Method for transferring the handling of an active connection made to a mobile terminal between two switching exchanges equipped for mobile services in a telecommunication system equipped for mobile communication, comprising at least one mobile terminal (MS), a plurality of base stations (BS) equipped for communication via a radio path with the mobile terminal and each having a working area with a limited range, at least two switching exchanges (MSC) equipped for mobile services and each being able to interact with a specific group of the plurality of base stations, and a exchange (TX) equipped for fixed telecommunication which is able to interact with the switching exchanges in which method, to transfer the handling of an active connection made, with the mobile terminal which is being handled by a first switching exchange which is connected to the exchange equipped for fixed telecommunication, to a base station associated with the other switching exchange, a connection is made between the first switching exchange and the other switching exchange and a connection is made between said other switching exchange and said base station associated therewith, which base station reserves a radio channel for the mobile terminal, after which the communication with the mobile terminal is taken over by said base station, characterized in that a connection is also made between the exchange equipped for fixed telecommunication and the other switching exchange, and in that, after the connection with the mobile terminal has been taken over by said base station associated with the other switching exchange,the entire handling of the connection is taken over by the other switching exchange and the connection between the two switching exchanges and between the first switching exchange and the exchange equipped for fixed telecommunication, is disconnected.

2. Method according to Claim 1, characterized in that, after the connection has been made between both switching exchanges the handling of the active connection in both switching exchanges runs synchronously, the first switching exchange having the authority to make decisions until the other switching exchange takes over the entire handling.

## Patentansprüche

1. Verfahren zum Uebertragen, zwischen zwei für mobile Dienste ausgerüsteten Vermittlungsanlagen, der Handhabung einer zu einem mobilen Terminal hergestellten aktiven Verbindung in einem für mobile Kommunikation ausgerüsteten Telekommunikationssystem, umfassend mindestens einen mobilen Terminal (MS), eine Vielzahl von Basisstationen (BS), die ausgerüstet sind für die Kommunikation, über einen Radioweg, mit dem mobilen Terminal, und wobei jede einen Arbeitsbereich mit beschränkter Reichweite besitzt, mindestens zwei für mobile Dienste ausgerüstete Vermittlungsanlagen (MSC), wobei jede mit einer spezifischen Gruppe der Vielzahl von Basisstationen zusammenwirken kann, und eine Zentrale (TX), die für feste Telekommunikation ausgerüstet ist und mit den Vermittlungsanlagen zusammenwirken kann, wobei bei diesem Verfahren, um die Handhabung einer hergestellten aktiven Verbindung zu übertragen, mit dem mobilen Terminal, der von einer ersten Vermittlungsanlage gehandhabt wird, die mit der für feste Telekommunikation ausgerüsteten Zentrale verbunden ist, an eine mit der andern Vermittlungsstelle assoziierten Basisstation, eine Verbindung zwischen der ersten Vermittlungsanlage und der anderen Vermittlungsanlage hergestellt und eine Verbindung zwischen dieser anderen Vermittlungsanlage und der mit ihr assoziierten Basisstation hergestellt wird, wobei diese Basisstation für den mobilen Terminal einen Radiokanal reserviert, nachdem die Kommunikation mit dem mobilen Terminal von dieser Basisstation übernommen wird, **dadurch** **gekennzeichnet**, dass auch eine Verbindung zwischen der für feste Telekommunikation ausgerüsteten Zentrale und der anderen Vermittlungsanlage hergestellt wird, und dass, nachdem die Verbindung mit dem mobilen Terminal von der mit der anderen Vermittlungsanlage assoziierten Basisstation übernommen worden ist, die ganze Handhabung der Verbindung von der anderen Vermittlungsanlage übernommen wird und die Verbindung zwischen den zwei Vermittlungsanlagen und zwischen der ersten Vermittlungsanlage und der für feste Telekommunikation ausgerüsteten Zentrale abgebrochen wird.

2. Verfahren nach Anspruch 1, **dadurch** **gekennzeichnet**, **dass** nach dem Herstellen der Verbindung zwischen beiden Vermittlungsanlagen, die Handhabung der aktiven Verbindung in beiden Vermittlungsanlagen synchron abläuft, wobei die erste Vermittlungsanlage die Entscheidungsgewalt hat, bis die andere Vermittlungsanlage die gesamte Handhabung übernimmt.

## Revendications

1. Procédé de transfert du traitement d'une communication active avec un terminal mobile entre deux centraux de commutation équipés pour des services mobiles dans un système de télécommunications, comprenant au moins un terminal mobile (MS), une pluralité de stations de base (BS) équipées pour des télécommunications, par l'intermédiaire d'un trajet radio, avec le terminal mobile et ayant chacune une zone de service d'étendue limitée, au moins deux centraux de commutation (MSC) équipés pour des services mobiles et étant chacun capables d'interagir avec un groupe spécifique de la pluralité de stations de base, et un central (TX) équipé pour des télécommunications fixes qui est capable d'interagir avec les centraux de commutation dans ledit procédé pour transférer le traitement d'une communication active établie avec le terminal mobile, qui est traitée par un premier central de commutation qui est relié au central équipé pour des télécommunications fixes, à une station de base associée à l'autre central de commutation, une liaison est établie entre le premier central de commutation et l'autre central de commutation, et une liaison est établie entre ledit autre central de commutation et ladite station de base associée à celui-ci, laquelle station de base réserve un canal radio pour le terminal mobile, après quoi la communication avec le terminal mobile est prise en charge par ladite station de base, caractérisé en ce qu'une liaison est établie également entre le central équipé pour des télécommunications fixes et l'autre central de commutation, et en ce que, après que la communication avec le terminal mobile a été prise en charge par ladite station de base associée à l'autre central de commutation, le traitement complet de la communication est pris en charge par l'autre central de commutation, et la liaison entre les deux centraux de commutation et entre le premier central de commutation et le central équipé pour des télécommunications fixes est supprimée.

2. Procédé selon la revendication 1, caractérisé en ce que, après que la liaison a été établie entre les deux centraux de commutation, le traitement de la communication active est exécuté de manière synchrone, le premier central de commutation ayant l'autorité de prendre des décisions jusqu'à ce que l'autre central de commutation prenne en charge le traitement complet de la communication.
